# EUROPEAN PATENT APPLICATION

(11) **EP 4 725 729 A1**
(43) Date of publication of application: **15.04.2026**
(21) Application number: 24822577.3
(22) Date of filing: 03.06.2024
(51) Int. Cl.: B60K 1/02, B60K 17/04

(54) **ELECTRIC DRIVE AXLE SYSTEM AND AUTOMOBILE**

(30) Priority: 12.06.2023 CN 202310692983
(71) Applicant: Sinotruk Jinan Power Co., Ltd., Jinan, Shandong 250000 (CN)
(72) Inventor: KONG, Zhuo, Jinan, Shandong 250000 (CN); WEI, Jianglong, Jinan, Shandong 250000 (CN); LI, Keliang, Jinan, Shandong 250000 (CN); LIU, Hongwei, Jinan, Shandong 250000 (CN)
(74) Representative: Elzaburu S.L.P.
(86) International application number: PCT/CN2024/096926
(87) International publication number: WO 2024/255625

(57) **Abstract**

Provided are an electric drive axle system (100) and an automobile, where the electric drive axle system (100) includes an electric drive axle main body (110), two drive motors (120), a planetary reduction device (130), and a transmission gear (140). An output shaft (100) of at least one of the two drive motors (120) is in transmission connection with the planetary reduction device (130), which is located between the drive motor (120) and the transmission gear (140). The planetary reduction device (130) includes a housing (131), an inner ring gear (132), a sun gear (133), a planet gear (134), and a planet carrier (135). The inner ring gear (132) is fixedly arranged within the housing (131). The sun gear (133) is in coaxial transmission connection with the output shaft (100) of the drive motor (120). The planet gear (134) is meshed between the sun gear (133) and the inner ring gear (132). An input shaft of the planet carrier (135) is rotatably connected to the center of the planet gear (134). An output shaft of the planet carrier (134) is in coaxial transmission connection with the transmission gear (140). The transmission gear (140) is in transmission connection with an input end of the electric drive axle main body (100). Provided are an electric drive axle system (100) and an automobile with a reduced oil-churning loss.

## Description

This application claims priority to the Chinese patent application No. 202310692983.9, filed with the China National Intellectual Property Administration on June 12, 2023, entitled "Electric Drive Axle System and Automobile", the entire content of which is incorporated herein by reference.

### TECHNICAL FIELD

The present invention relates to the field of electric drive axles for automobiles, and in particular to an electric drive axle system and an automobile.

### BACKGROUND

An electric drive axle is a critical mechanism located in the chassis of a new-energy automobile and used to transmit the rotational speed and torque of an electric motor to the wheels.

In current electric drive axles, the electric motor is often in direct transmission connection to a cylindrical gear, and then the cylindrical gear meshes with other parts of the electric drive axle to drive the wheels to move.

However, with this manner of transmission, the automobile's oil-churning loss is often relatively large.

### SUMMARY

To solve at least one of the problems mentioned in the background, the present invention provides an electric drive axle system and an automobile with a reduced oil-churning loss.

To achieve the above object, the present invention provides the following technical solutions.

In a first aspect, the present invention provides an electric drive axle system, including an electric drive axle main body, two drive motors, a planetary reduction device, and a transmission gear; an output shaft of at least one of the two drive motors is in transmission connection with the planetary reduction device, the planetary reduction device being located between the drive motor and the transmission gear; the planetary reduction device includes a housing, an inner ring gear, a sun gear, a planet gear, and a planet carrier; the inner ring gear is fixedly arranged in the housing, the sun gear is in coaxial transmission connection with the output shaft of the drive motor, the planet gear is meshed between the sun gear and the inner ring gear, an input shaft of the planet carrier is rotatably connected to the center of the planet gear, an output shaft of the planet carrier is in coaxial transmission connection with the transmission gear, and the transmission gear is in transmission connection with an input end of the electric drive axle main body.

As an optional embodiment, the planet gear includes two cylindrical gears, and the planet carrier includes two input shafts, the two input shafts being rotatably connected to centers of the two planet gears respectively.

As an optional embodiment, the planet gear includes two duplicate gears, each duplicate gear includes a first meshing tooth and a second meshing tooth, and the first meshing tooth and the second meshing tooth are coaxial and fixedly connected together with a spacing, the first meshing tooth meshes with the inner ring gear, and the second meshing tooth meshes with the sun gear.

As an optional embodiment, a diameter of the first meshing tooth is smaller than that of the second meshing tooth.

As an optional embodiment, a one-way bearing is further included, an inner ring of the one-way bearing is mounted on the output shaft of the planet carrier and the transmission gear is mounted on an outer ring of the one-way bearing.

As an optional embodiment, the two drive motors are arranged on both sides of the electric drive axle main body along a first horizontal direction.

As an optional embodiment, there are two planetary reduction devices, which are symmetrically arranged on both sides of the electric drive axle main body along the first horizontal direction.

As an optional embodiment, the output shafts of the two drive motors and the output shaft of the planet carrier all extend along a second horizontal direction perpendicular to the first horizontal direction.

As an optional embodiment, a casing is further included, and the two drive motors and the planetary reduction devices are mounted on the casing.

In a second aspect, the present invention also provides an automobile, including the dual-motor electric drive axle system according to any one option of the first aspect.

The electric drive axle system provided by the present invention includes an electric drive axle main body, two drive motors, a planetary reduction device and a transmission gear, where an output shaft of at least one of the two drive motors is in transmission connection with the planetary reduction device, which is located between the drive motor and the transmission gear; the planetary reduction device includes a housing, an inner ring gear, a sun gear, planet gear and a planet carrier, where the inner ring gear is fixedly arranged in the housing, the sun gear is in coaxial transmission connection with the output shaft of the drive motor, the planet gear is meshed between the sun gear and the inner ring gear, an input shaft of the planet carrier is rotatably connected to the center of the planet gear, an output shaft of the planet carrier is in coaxial transmission connection with the transmission gear, the transmission gear is in transmission connection with an input end of the electric drive axle main body. The electric drive axle system provided by the present invention is equipped with a planetary reduction device at the output-shaft end of the drive motor. The drive motor may transmits its own power to the transmission gear through the sun gear, the planet gear and the planet carrier in sequence, and then the transmission gear transmits the power to the electric drive axle main body, thereby driving the wheels to move. In this way, even when the motor rotates at a high speed, the transmission gear can rotate at a relatively low speed, thereby reducing oil-churning loss.

### BRIEF DESCRIPTION OF DRAWINGS

To more clearly illustrate the technical solutions of the embodiments of the present invention or the prior art, the drawings required in the embodiments or the prior art description will be briefly introduced below. Obviously, the drawings in the following description are some embodiments of the present invention. For those of ordinary skill in the art, on the premise of not making creative labor, other drawings can also be obtained according to these drawings.
FIG. 1 is a first structural schematic diagram of an electric drive axle system provided by an embodiment of the present invention.
FIG. 2 is a second structural schematic diagram of an electric drive axle system provided by an embodiment of the present invention.
FIG. 3 is a third structural schematic diagram of an electric drive axle system provided by an embodiment of the present invention.
FIG. 4 is a fourth structural schematic diagram of an electric drive axle system provided by an embodiment of the present invention.

### Description of reference numerals:

100 - Electric drive axle system
110 - Electric drive axle main body
120 - Drive motor
130 - Planetary reduction device
131 - Housing
132 - Inner ring gear
133 - Sun gear
134 - Planet gear
1341 - First meshing tooth
1342 - Second meshing tooth
135 - Planet carrier
140 - Transmission gear
150 - One-way bearing
200 - Wheel
Y - First horizontal direction
X - Second horizontal direction

### DESCRIPTION OF EMBODIMENTS

The technical solutions in the embodiments of the present invention will be clearly and completely described below in conjunction with the accompanying drawings. It is obvious that the described embodiments are only part of the embodiments of the present invention, rather than all of them. Based on the embodiments of the present invention, all other embodiments obtained by those of ordinary skill in the art without making creative labor shall fall within the scope of protection of the present invention.

In the present application, the terms "upper," "lower," "left," "right," "front," "rear," "top," "bottom," "inner," "outer," "vertical," "horizontal," "transverse," "longitudinal," and the like, indicate orientations or positional relationships based on those shown in the accompanying drawings. These terms are used primarily to better describe the present invention and its embodiments, and are not intended to limit that the indicated devices, elements, or components must have a specific orientation, or be constructed and operated in a specific orientation.

Furthermore, in addition to being used to indicate orientations or positional relationships, some of the aforementioned terms may be used to express other meanings. For example, the term "upper" may, in certain circumstances, be used to indicate a certain attachment or connection relationship. Those of ordinary skill in the art may understand the specific meanings of these terms in the present invention based on the specific context.

Additionally, the terms "mount", "dispose", "provide", "connect", and "interconnect" shall be construed broadly. For example, they may denote a fixed connection, a detachable connection, or an integral construction; a mechanical connection or an electrical connection; or a direct connection or an indirect connection via an intermediate medium, or an internal communication between two devices, elements, or components. Those of ordinary skill in the art will understand the specific meanings of the above terms in the present invention based on specific circumstances.

In addition, terms such as "first," "second," etc. are used primarily to distinguish different devices, elements, or components (which may be of the same or different types and constructions), and are not intended to indicate or imply the relative importance or quantity of the referenced devices, elements, or components. Unless otherwise specified, "a plurality of" means two or more.

An electric drive axle is an important mechanism located on the chassis of a new-energy automobile and is used to transmit the motor's rotational speed and torque to the wheels. At present, the motor of the electric drive axle is often directly connected to a cylindrical gear in a transmission manner, and then the cylindrical gear meshes with other parts of the electric drive axle to drive the wheels to move. However, in this transmission mode, since the motor and the subsequent cylindrical gear rotate synchronously, a large oil churning loss (power loss caused by the idling of components of automobile) is generated.

Based on the above problem, the present invention provides an electric drive axle system including: an electric drive axle main body, two drive motors, a planetary reduction device, and a transmission gear, where an output shaft of at least one of the two drive motors is in transmission connection with the planetary reduction device, and the planetary reduction device is positioned between the drive motor and the transmission gear; the planetary reduction device includes a housing, an inner ring gear, a sun gear, planet gear and a planet carrier, the inner ring gear is fixed inside the housing, the sun gear is in coaxial transmission connection with the output shaft of the drive motor, the planet gear is meshed between the sun gear and the inner ring gear, the input shaft of the planet carrier is rotatably connected to the center of the planet gear, while the output shaft of the planet carrier is in coaxial transmission connection with the transmission gear, and the transmission gear is in transmission connection with the input end of the electric drive axle main body. In the electric drive axle system provided by the present invention, a planetary reduction device is provided at the output-shaft end of the drive motor. The drive motor may transmit its own power to the transmission gear through the sun gear, the planet gear and the planet carrier in sequence, then the transmission gear transmits the power to the electric drive axle main body, thereby driving the wheels to move. In this way, even when the motor has a relatively high rotational speed, the transmission gear may have a relatively low rotational speed, thereby reducing oil-churning loss.

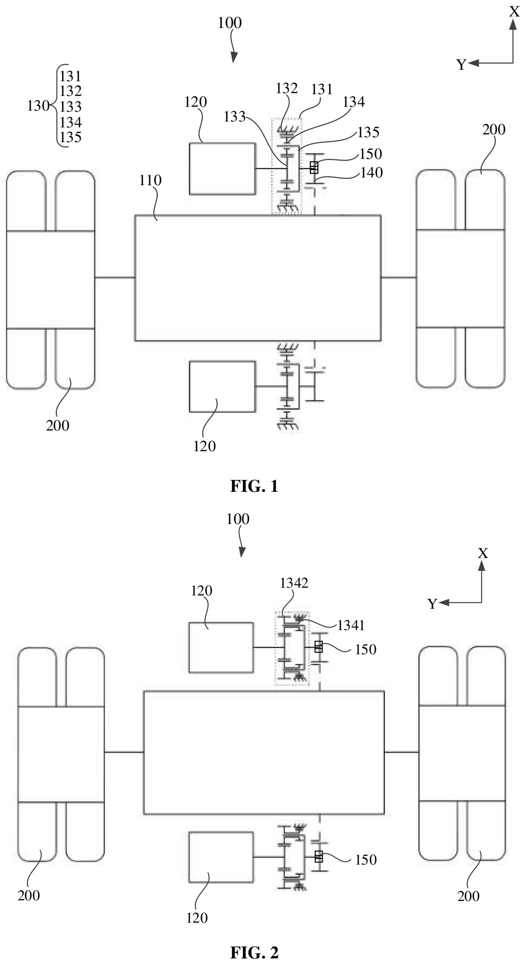

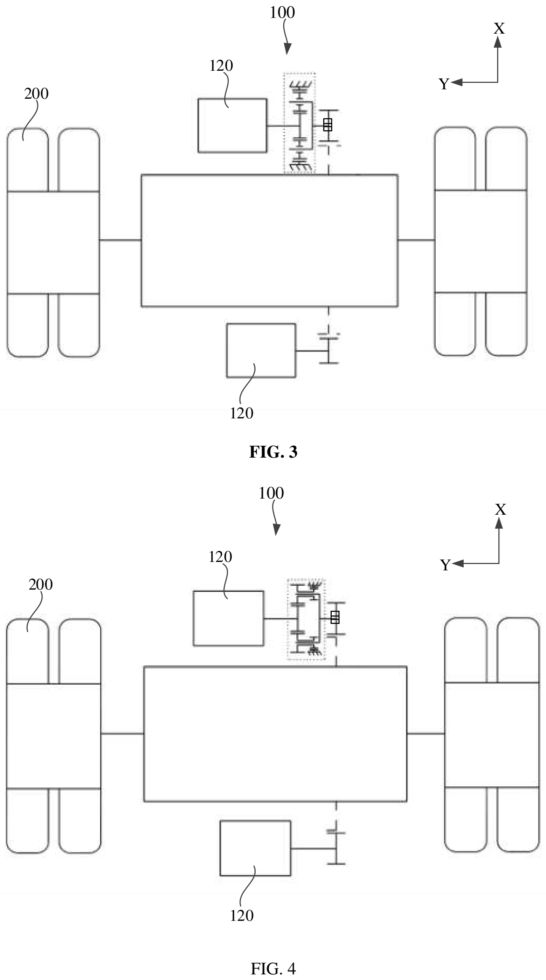

FIG. 1 is a first structural schematic diagram of an electric drive axle system provided by an embodiment of the present invention; FIG. 2 is a second structural schematic diagram of an electric drive axle system provided by an embodiment of the present invention; FIG. 3 is a third structural schematic diagram of an electric drive axle system provided by an embodiment of the present invention; and FIG. 4 is a fourth structural schematic diagram of an electric drive axle system provided by an embodiment of the present invention. Referring to FIGS. 1 to 4, an embodiment of the present invention provides an electric drive axle system 100 that includes an electric drive axle main body 110, two traction motors 120, a planetary reduction device 130 and a transmission gear 140. The output shaft of at least one of the two traction motors 120 is in transmission connection with the planetary reduction device 130, which is located between the drive motor 120 and the transmission gear 140; the planetary reduction device 130 includes a housing 131, an inner ring gear 132, a sun gear 133, planet gear 134, and a planet carrier 135. The inner ring gear 132 is fixedly disposed within the housing 131. The sun gear 133 is in coaxial transmission connection with the output shaft of the drive motor 120. The planet gear 134 is meshed between the sun gear 133 and the inner ring gear 132. An input shaft of the planet carrier 135 is rotatably connected to the center of the planet gear 134. An output shaft of the planet carrier 135 is in coaxial transmission connection with the transmission gear 140. The transmission gear 140 is in transmission connection with an input end of the electric drive axle main body 110.

It is to be understood that the electric drive axle main body 110 may refer to the part of the electric drive axle of the present embodiment excluding the drive motors 120, the planetary reduction device 130 and the transmission gear 140. The power output by the drive motor 120 is delivered to the wheels 200 through the electric drive axle main body 110, thereby driving the wheels to move.

The housing 131 is a box wrapped outside the planetary reduction device 130, mainly serving to protect the internal transmission components. The inner ring gear 132, the sun gear 133, and the planet gear 134 are all disposed inside the housing 131.

In the above embodiment, the sun gear 133 may be arranged at the center of the inner ring gear 132, and the centers of the sun gear 133 and the inner ring gear 132 are on one straight line. The sun gear 133 may specifically use a cylindrical gear.

Where the input shaft of the planet carrier 135 may be a connecting end of the planet carrier 135 close to the drive motor 120, and the output shaft is a connecting end away from the drive motor 120.

When the drive motor 120 rotates, the drive motor 120 may drive the sun gear 133 that is in transmission connection with it to rotate together. The sun gear 133 then drives the planet gear 134 meshed with it to roll along the meshing teeth on the inner wall of the inner ring gear 132, thereby driving the planet carrier 135 to rotate. The planet carrier 135 may transmit its own torque, by its output shaft, to the transmission gear 140.

It should be noted that, as shown in FIGS. 1 and 2, a planetary reduction device 130 may be provided at each of the two drive motors 120; alternatively, as shown in FIGS. 3 and 4, the planetary reduction device 130 may be provided at only one of the two drive motors 120. No specific limitation is imposed on this in the embodiments of the present application.

In the electric drive axle system 100 provided by the embodiments of the present invention, by providing the planetary reduction device 130 at the output-shaft end of the drive motor 120, the drive motor 120 may transmit its own power to the transmission gear 140 through the sun gear 133, the planet gear 134 and the planet carrier 135 in sequence, and then the transmission gear 140 transmits the power to the electric drive axle main body 110, thereby driving the wheels 200 to move. In this way, even when the motor has a relatively high rotational speed, the transmission gear 140 may have a relatively low rotational speed, thereby reducing oil-churning loss.

In the above embodiments, the planet gear 134 may be a separate cylindrical gear, a duplicate gear, etc. Specifically, as shown in FIG. 1, the planet gear 134 may include at least two cylindrical gears, and the planet carrier 135 has the same number of input shafts as the cylindrical planet gears. Each input shaft of the planet carrier 135 is rotatably connected to the center of one cylindrical planet gear 134.

Alternatively, as shown in FIG. 2, the planet gear 134 may include at least two duplicate gears. Each duplicate gear includes a first meshing tooth 1341 and a second meshing tooth 1342. The first meshing tooth 1341 and the second meshing tooth 1342 are coaxial and fixedly connected together with a spacing. The first meshing tooth 1341 meshes with the inner ring gear 132, and the second meshing tooth 1342 meshes with the sun gear 133. The planet carrier 135 has the same number of input shafts as the duplicate gears, and each input shaft of the planet carrier 135 is rotatably connected to the center of one duplicate gear. In a specific implementation, a diameter of the first meshing tooth 1341 may be smaller than that of the second meshing tooth 1342. Using the duplicate gears as the planet gear 134 allows more stable transmission, smaller noise, higher transmission efficiency, and stronger bearing capacity.

In the above embodiments, a one-way bearing 150 may also be included. An inner ring of the one-way bearing 150 is mounted on the output shaft of the planet carrier 135, and the transmission gear 140 is mounted on an outer ring of the one-way bearing 150. The one-way bearing 150 only allows unidirectional relative rotation between components mounted on it. In one application scenario, when one of the drive motors 120 needs to drive the wheels 200 to move, the one-way bearing 150 on the same side as this drive motor 120 can be provided to not allow relative rotation between the transmission gear 140 and the output shaft of the planet carrier 135; in this way, the planet carrier 135 can transmit power to the transmission gear 140 via its output shaft, and the transmission gear 140 can then transmit the power to the electric drive axle main body 110, thereby driving the wheels 200 to move. At the same time, the one-way bearing 150 on the same side as the other drive motor 120 can be provided to allow relative rotation between the transmission gear 140 mounted on it and the output shaft of the planet carrier 135; in this way, even if the transmission gear 140 disposed on the same side as this drive motor 120 is passively rotated under the drive of the electric drive axle main body 110, the transmission gear 140 cannot transmit torque to the planetary reduction device 130 and this drive motor 120, effectively reducing oil churning loss. Of course, as shown in FIG. 1, a one-way bearing 150 may be provided only at the transmission gear 140 on one side of the electric drive axle main body 110 and the mechanism of action of the one-way bearing 150 is the same as described above and will not be repeated here.

In the above embodiments, the two drive motors 120 may be arranged on both sides of the electric drive axle main body 110 along a first horizontal direction Y. The first horizontal direction Y may be a length direction of the vehicle body. Specifically, the two drive motors 120 may be symmetrically arranged to enhance the overall stability of the electric drive axle structure.

As shown in FIGS. 1 and 2, in the above embodiments, there may be two planetary reduction devices 130, which may be symmetrically arranged on both sides of the electric drive axle main body 110 along the first horizontal direction Y. The structures of the two planetary reduction devices 130 may be identical, and the symmetrical arrangement of the two planetary reduction devices 130 can simplify the structure of the electric drive axle system 100 and reduce the manufacturing cost.

In the above embodiments, the output shafts of the two drive motors 120 and the output shaft of the planet carrier 135 may all extend along a second horizontal direction X, which is perpendicular to the first horizontal direction Y. The output shafts of the drive motors 120 and the output shaft of the planet carrier 135 having consistent direction can enhance the efficiency and stability of power transmission.

In the above embodiments, a casing may also be included, on which the two drive motors 120 and the planetary reduction device 130 are mounted. The casing mainly serves as a support and enclosure part for the components of the electric drive axle. The casing is generally fixedly arranged relative to the automobile body. The housing of the drive motors 120 and the planetary reduction device 130 in this embodiment may be fixedly connected to the casing.

The electric drive axle system 100 provided by the embodiments of the present invention may include an electric drive axle main body 110, two drive motors 120, a planetary reduction device 130, and a transmission gear 140. An output shaft of at least one of the two drive motors 120 is in transmission connection with the planetary reduction device 130, which is located between the drive motor 120 and the transmission gear 140, the planetary reduction device 130 includes a housing 131, an inner ring gear 132, a sun gear 133, planet gear 134, and a planet carrier 135, where the inner ring gear 132 is fixedly disposed within the housing 131, the sun gear 133 is in coaxial transmission connection with the output shaft of the drive motor 120, the planet gear 134 is meshed between the sun gear 133 and the inner ring gear 132, an input shaft of the planet carrier 135 is rotatably connected to the center of the planet gear 134, an output shaft of the planet carrier 135 is in coaxial transmission connection with the transmission gear 140, and the transmission gear 140 is in transmission connection with an input end of the electric drive axle main body 110. The electric drive axle system 100 provided by the embodiments of the present invention arranges the planetary reduction device 130 at the output-shaft end of the drive motor 120, and then the drive motor 120 transmits its own power to the transmission gear 140 through the sun gear 133, the planet gear 134 and the planet carrier 135 in sequence, then the transmission gear 140 transmits the power to the electric drive axle main body 110, thereby driving the wheels 200 to move. In this way, even when the motor has a relatively high rotational speed, the transmission gear 140 can have a relatively low rotational speed, thereby reducing oil-churning loss.

In addition, the present invention also provides an automobile that includes any of the dual-motor electric drive axle systems 100 described in any one of the above embodiments. The electric drive axle system 100 includes an electric drive axle main body 110, two drive motors 120, a planetary reduction device 130, and a transmission gear 140. An output shaft of at least one of the two drive motors 120 is in transmission connection with the planetary reduction device 130, which is located between the drive motor 120 and the transmission gear 140; the planetary reduction device 130 includes a housing 131, an inner ring gear 132, a sun gear 133, planet gear 134, and a planet carrier 135 where the inner ring gear 132 is fixedly disposed within the housing 131; the sun gear 133 is in coaxial transmission connection with the output shaft of the drive motor 120; the planet gear 134 is meshed between the sun gear 133 and the inner ring gear 132; and an input shaft of the planet carrier 135 is rotatably connected to the center of the planet gear 134, and an output shaft of the planet carrier 135 is in coaxial transmission connection with the transmission gear 140. The transmission gear 140 is in transmission connection with an input end of the electric drive axle main body 110. In the electric drive axle systems 100, by arranging the planetary reduction device 130 at the output-shaft end of the drive motor 120, the drive motor 120 can transmit its own power to the transmission gear 140 through the sun gear 133, the planet gears 134 and the planet carrier 135 in sequence, and then the transmission gear 140 transmits the power to the electric drive axle main body 110, thereby driving the wheels 200 to move. In this way, even when the motor has a relatively high rotational speed, the transmission gear 140 may have a relatively low rotational speed, thereby reducing oil-churning loss of the automobile.

It should be finally noted that the above embodiments are merely used to illustrate the technical solutions of the present invention and are not intended to limit them. Although the present invention has been described in detail with reference to the foregoing embodiments, those of ordinary skill in the art should understand that they can still modify the technical solutions described in the foregoing embodiments or replace some or all of the technical features therein with their equivalents. These modifications or replacements do not cause the essence of the corresponding technical solutions to depart from the scope of the technical solutions of the embodiments of the present invention.

## Claims

1. An electric drive axle system, **characterized by** comprising an electric drive axle main body, two drive motors, a planetary reduction device, a one-way bearing, and a transmission gear, wherein an output shaft of at least one of the two drive motors is in transmission connection with the planetary reduction device, which is located between the drive motor and the transmission gear; the two drive motors are arranged on both sides of the electric drive axle main body along a first horizontal direction; the planetary reduction device comprises a housing, an inner ring gear, a sun gear, planet gear, and a planet carrier, the inner ring gear is fixedly disposed within the housing, the sun gear is in coaxial transmission connection with the output shaft of the drive motor, the planet gear is meshed between the sun gear and the inner ring gear, an input shaft of the planet carrier is rotatably connected to a center of the planet gear, an output shaft of the planet carrier is in coaxial transmission connection with the transmission gear, the transmission gear is in transmission connection with an input end of the electric drive axle main body;
an inner ring of the one-way bearing is mounted on the output shaft of the planet carrier, and the transmission gear is mounted on an outer ring of the one-way bearing; the one-way bearing only allows unidirectional relative rotation between components mounted on it; there are two planetary reduction devices, which are symmetrically arranged on both sides of the electric drive axle main body along the first horizontal direction,
when one drive motor needs to drive the vehicle to move, the one-way bearing on the same side as this drive motor is provided to prevent relative rotation between the transmission gear and the output shaft of the planet carrier, the planet carrier transmits power to the transmission gear via its output shaft, and the transmission gear then transmits the power to the electric drive axle main body, thereby driving wheels to move; at the same time, the one-way bearing on the same side as the other drive motor is provided to allow relative rotation between the transmission gear mounted on it and the output shaft of the planet carrier.

2. The electric drive axle system according to claim 1, wherein the planet gear comprises two cylindrical gears, and the planet carrier comprises two input shafts, the two input shafts being rotatably connected to centers of two planet gears respectively.

3. The electric drive axle system according to claim 1, wherein the planet gear comprises two duplicate gears, each duplicate gear comprising a first meshing tooth and a second meshing tooth, the first meshing tooth and the second meshing tooth are coaxial and fixedly connected together with a spacing; the first meshing tooth meshes with the inner ring gear, and the second meshing tooth meshes with the sun gear.

4. The electric drive axle system according to claim 3, wherein a diameter of the first meshing tooth is smaller than a diameter of the second meshing tooth.

5. The electric drive axle system according to claim 1, wherein the output shafts of the two drive motors and the output shaft of the planet carrier all extend along a second horizontal direction perpendicular to the first horizontal direction.

6. The electric drive axle system according to any one of claims 1 to 5, further comprising a casing, on which the two drive motors and the planetary reduction device are mounted.

7. An automobile, **characterized by** comprising the electric drive axle system according to any one of claims 1 to 6.
